# EUROPEAN PATENT APPLICATION

(11) **EP 2 436 742 A2**
(43) Date of publication of application: **04.04.2012**
(21) Application number: 11183376.0
(22) Date of filing: 30.09.2011
(51) Int. Cl.: C09J 7/02

(54) **Pressure-sensitive adhesive sheet**

(30) Priority: 01.10.2010 JP 2010224163
(71) Applicant: Nitto Denko Corporation, Ibaraki-shi, Osaka 567-8680 (JP)
(72) Inventor: Wada, Hiroshi, Ibaraki-shi, Osaka 567-8680 (JP); Takahashi, Akiko, Ibaraki-shi, Osaka 567-8680 (JP); Nishiyama, Naoyuki, Ibaraki-shi, Osaka 567-8680 (JP)
(74) Representative: Grünecker, Kinkeldey, Stockmair & Schwanhäusser

(57) **Abstract**

The present invention provides a pressure-sensitive adhesive (PSA) sheet that has reduced emission of volatile organic compounds (VOCs), effectively displays that the PSA sheet has low VOC specifications, and demonstrates superior adhesion properties. A PSA sheet 1 is provided with a release liner 17 having, on at least a first side thereof, a release layer composed of a silicone-based release agent, and a PSA layer 15 provided on the release layer and containing an acrylic polymer synthesized in ethyl acetate as an adhesive component thereof. The release layer has an amount of silicone that transfers to Single-Sided Adhesive Tape No. 31 B manufactured by Nitto Denko Corporation of 10 kcps or less per unit surface area equivalent to a circle having a diameter of 30 mm when determined as X-ray intensity of silicon by X-ray fluorescence analysis. A mark 16 of a color selected from green and blue is displayed on the back of the PSA sheet 1.

## Description

### CROSS-REFERENCE

The present application claims priority on the basis of Japanese Patent Application No. 2010-224163, filed on October 1, 2010, the entire content of which is incorporated herein by reference.

### BACKGROUND OF THE INVENTION

### 1. Field of the Invention

The present invention relates to a pressure-sensitive adhesive (PSA) sheet imposing a small burden on the environment and having superior adhesion properties.

### 2. Description of the Related Art

PSA sheets generally have a form in which a PSA layer is protected by a liner able to release from the PSA layer (release liner). The surface of the release liner that contacts the PSA layer is normally a release surface to which is imparted a layer composed of a release agent (release layer). A silicone-based release agent is an example of a release agent having superior handling ease and heat resistance. Technologies relating to a silicone-based release agent or release liner formed using such a release agent are described in Japanese Patent Application Publication Nos. H10-237393, H6-297645 and 2006-291121.

### SUMMARY OF THE INVENTION

The amounts of volatile organic compounds (VOC) emitted from PSA sheets have recently come to be viewed as important as a part of improving the value of PSA sheets in consideration of the environment and improvement of the work environment. An example of technical document relating to this type of technology is Japanese Patent Application Publication No. 2006-111818. There is a desire to reduce the emission of aromatic hydrocarbos exemplified by toluene in particular (i.e. to reduce VOC). Consequently, when forming a PSA layer of a PSA sheet, a PSA composition, having for a base thereof a polymer synthesized in an aqueous solvent or non-toluene-based organic solvent such as ethyl acetate (hereinafter, aqueous solvents and non-toluene-based organic solvents may be collectively referred to as "non-toluene-based solvents"), tends to be used preferably. However, PSA sheets formed using such non-toluene-based PSA compositions tend to have lower adhesion performance (such as curved surface adhesion) than conventional PSA sheets using PSA compositions having for a base thereof polymers synthesized in toluene.

In addition, the priority of the degree of the reduction in VOC emission required by a PSA sheet can vary according to the expected application of the PSA sheet (such as the user, usage area or usage environment) and the like. Consequently, there is a need at least for the time being to be able to differentiate between the use of low-VOC PSA sheets and conventional PSA sheets not having low VOC specifications (namely, PSA sheets in which countermeasures against VOC such as the use of raw materials or production methods suitable for reducing VOC have not been employed). On the basis of these circumstances, it is of considerable significance to give considerations to be able to easily distinguish whether or not a PSA sheet is of low VOC specifications or not. However, even if a description indicating that a PSA sheet is of low VOC specifications is present on a packaging material at the time it is distributed as a product (PSA product), since the packaging material ends up being discarded after the PSA product is opened, any description on the packaging material cannot be referred to at the time the PSA sheet is actually used. Consequently, problems result such as a low-VOC PSA sheet being mistaken for a PSA sheet not having low VOC specifications, or the need for excessive labor and restrictions in order to implement measures for preventing these PSA sheets from being mistaken. In order to eliminate these problems, it is desirable to employ a configuration that makes it possible to easily confirm whether or not a PSA sheet has low VOC specifications at the time the PSA sheet is actually used. As a result thereof, the burden on a user of the PSA sheet (such as a worker engaged in assembly of electrical products using the PSA sheet as joining means) can be reduced, and PSA sheets of both specifications can be distinguished more accurately.

An object of the present invention is to provide a PSA sheet that reduces the amount of VOC emission by using a non-toluene-based PSA composition, is able to effectively indicate that the PSA sheet has low VOC specifications, and demonstrates superior adhesion properties.

The inventors of the present invention found that, by limiting to equal to or less than a prescribed value the amount of silicone that transfers from a release layer to a PSA layer, as determined by a prescribed evaluation method, in a PSA sheet provided with a release liner using a silicone-based release agent, satisfactory adhesion properties (such as curved surface adhesion) can be realized even with a PSA sheet using a non-toluene-based PSA composition, thereby leading to completion of the present invention.

According to the present invention, a PSA sheet is provided that is provided with a release liner having, on at least a first side thereof, a release layer composed of a silicone-based release agent, and a PSA layer provided on the release layer. Here, a PSA composition that composes the PSA layer contains an acrylic polymer synthesized in ethyl acetate as a PSA component. The release layer has an amount of silicone that transfers to Single-Sided Adhesive Tape No. 31B manufactured by Nitto Denko Corporation of 10 kcps or less per unit surface area equivalent to a circle having a diameter of 30 mm when determined as X-ray intensity of silicon (Si) by X-ray fluorescence analysis. A mark of a color selected from green and blue is displayed on the back of the PSA sheet.

Since the PSA sheet of this configuration is provided with a non-toluene-based PSA layer, the amount of toluene emission and the total amount of VOC emission (the total amount of VOC, also referred to as TVOC) from the PSA sheet can be reduced, thereby making the PSA sheet preferable in terms of environmental health. In addition, an acrylic polymer synthesized in ethyl acetate, which is a non-toluene-based organic solvent, is used for the acrylic polymer, thereby imposing a small burden on the natural environment and being preferable in terms of the work environment during production of the PSA sheet. Since the transferred amount of silicone as evaluated (determined) according to the method described above is low, the effect of transfer of silicone from the release layer to the PSA layer on adhesion performance can be held to a low level, thereby making it possible to better demonstrate superior adhesion properties inherent to the PSA layer. Moreover, a green and/or blue mark is displayed on the back of the PSA sheet, and since the colors of green and blue (and especially green) are generally associated with environmentally-friendly products (products imposing a small burden on the environment or products preferable in terms of environmental health), according to the PSA sheet having a mark of this color displayed on the back thereof, the fact that the PSA sheet has low VOC specifications can be instantaneously recognized from the external appearance of the PSA sheet. Since the mark is displayed on the back of the PSA sheet, work can be carried out while confirming that the PSA sheet has low VOC specifications when the PSA sheet is used (such as when it is adhered to an adherend or cut to a prescribed size). Thus, a PSA sheet having low VOC specifications can be accurately distinguished from PSA sheets of other specifications while reducing the burden on a user (by reducing the bother of confirmation or reducing the mental burden).

The transferred amount of silicone of the release layer per unit surface area equivalent to a circle having a diameter of 30 mm employs a value quantified in accordance with the following silicone transfer measurement method.

### [Silicone Transfer Measurement Method]

A test piece is prepared by laminating an adhesive surface of Single-Sided Adhesive Tape No. 31B manufactured by Nitto Denko Corporation to the release surface (release layer) of a release liner to be measured. This test piece is then placed in a dryer at 70°C for 24 hours after imparting a load of 5 kg followed by removing the load, taking out of the dryer and holding for an additional 2 hours at 23°C. The release liner is then peeled from the test piece and the amount F of Si (kcps) present per unit surface area equivalent to a circle having a diameter of 30 mm on the exposed adhesive surface is measured by X-ray fluorescence analysis. The amount I of Si (kcps) present per unit surface area equivalent to a circle having a diameter of 30 mm on an adhesive surface of the above-mentioned adhesive tape is measured by X-ray fluorescence analysis as a blank. The value obtained by subtracting I from F is the transferred amount of silicone of the release layer.

An example of a preferable silicone-based release agent for the PSA sheet disclosed herein is solvent-free silicone. Another preferable example is heat-curable silicone.

In a preferable aspect of the PSA sheet disclosed herein, the total amount of toluene emitted from the PSA sheet when the sheet is held for 30 minutes at 80°C (toluene emission) is 20 µg or less per gram of the PSA layer, and the amount of TVOC emitted from the sheet (hereinafter, may be referred to as "TVOC emission") is 300 µg or less per gram of the PSA layer. A PSA sheet in which toluene emission and TVOC emission are reduced in this manner can be preferably used in products used in enclosed spaces in the manner of automobile or residential interior materials or in applications for joining or fixing members of products that can reach a high temperature at the time of use.

In another preferable aspect, the PSA layer contains an acrylic polymer obtained by polymerizing a monomer starting material containing an acrylic monomer represented by the general formula: CH₂=C(R¹)COOR². Here, R¹ represents a hydrogen atom or methyl group, and R² represents an alkyl group with 2 to 14 carbon atoms. According to this aspect, a PSA sheet can be realized that demonstrates even more superior PSA properties.

In still another preferable aspect, the PSA sheet is configured as a double-sided adhesive PSA sheet (double-sided PSA sheet). Namely, in this aspect, a substrate of which both sides are non-releasing is laminated onto the PSA layer on the release layer, and a PSA layer is further laminated onto the substrate. As has been previously described, the PSA sheet disclosed herein has reduced emission of toluene and TVOC and can demonstrate superior adhesion properties. Thus, a double-sided PSA sheet of this configuration is preferable in terms of environmental health, and can be preferably used as joining means of various types of parts that demonstrates superior adhesion.

### BRIEF DESCRIPTION OF THE DRAWINGS

FIG: 1 is a perspective view schematically showing an example of the configuration of the PSA sheet as claimed in the present invention;
FIG. 2 is a cross-sectional view taken along line II-II of FIG. 1;
FIG. 3 is a cross-sectional view schematically showing another example of the configuration of the PSA sheet as claimed in the present invention;
FIG. 4 is a cross-sectional view schematically showing another example of the configuration of the PSA sheet as claimed in the present invention;
FIG. 5 is a cross-sectional view schematically showing another example of the configuration of the PSA sheet as claimed in the present invention;
FIG. 6 is a cross-sectional view schematically showing another example of the configuration of the PSA sheet as claimed in the present invention;
FIG. 7 is a cross-sectional view schematically showing another example of the configuration of the PSA sheet as claimed in the present invention;
FIG. 8 is a schematic diagram showing the initial state of a test piece affixed to an adherend in an evaluation of curved surface adhesion; and
FIG. 9 is a schematic diagram showing the state in which the ends of a test piece affixed to an adherend have lifted from the adherend in an evaluation of curved surface adhesion.

### DETAILED DESCRIPTION OF THE INVENTION

The following provides an explanation of preferred embodiments of the present invention. Matters other than those specifically mentioned in this description that are required for carrying out the invention can be understood to be design matters carried out by persons with ordinary skill in the art based on the prior art in the relevant field. The present invention can be carried out based on the contents disclosed in this description and matters of technical common sense in the relevant field. In addition, in the following explanations, the same reference numerals are used to indicate those members or sites that demonstrate similar actions, and duplicate explanations thereof may be omitted or simplified.

The PSA sheet according to the present invention is provided with a release liner having, on at least a first side thereof, a release layer composed of a silicone-based release agent, and a PSA layer that is provided on the release layer and formed from a non-toluene-based PSA composition. The concept of this PSA sheet can include that referred to as PSA tape, PSA labels or PSA film and the like. Although the PSA layer is typically formed continuously, it is not limited thereto, but rather may be formed in a regular or random pattern such as dots or stripes. In addition, the PSA sheet disclosed herein can be processed into various forms such as rolls or individual sheets.

A mark of a color selected from green and blue is displayed on the back of the PSA sheet. In a preferable aspect, the mark is displayed on the back of the release liner (or on the back of at least one of the release liners in a PSA sheet having two release liners). In addition, the mark may be displayed on the back of the substrate in the case of a PSA sheet provided with a substrate of the single-sided PSA type, or may be displayed on both the back of the release liner and the back of the substrate. In the case of a PSA sheet in the form of a roll, the mark is preferably displayed on the outside (outer peripheral surface) of the roll.

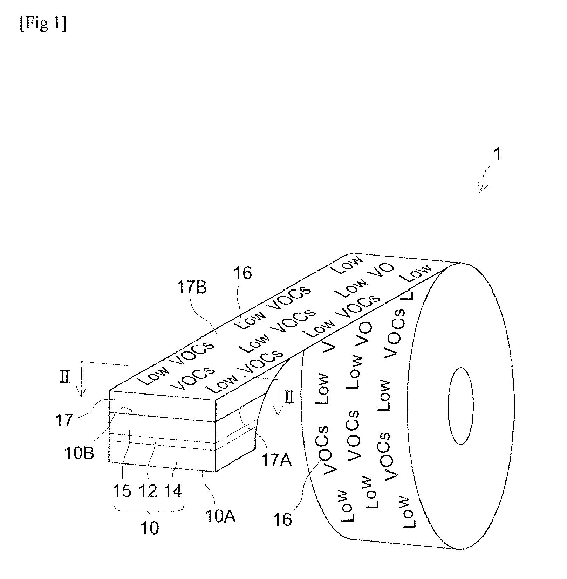

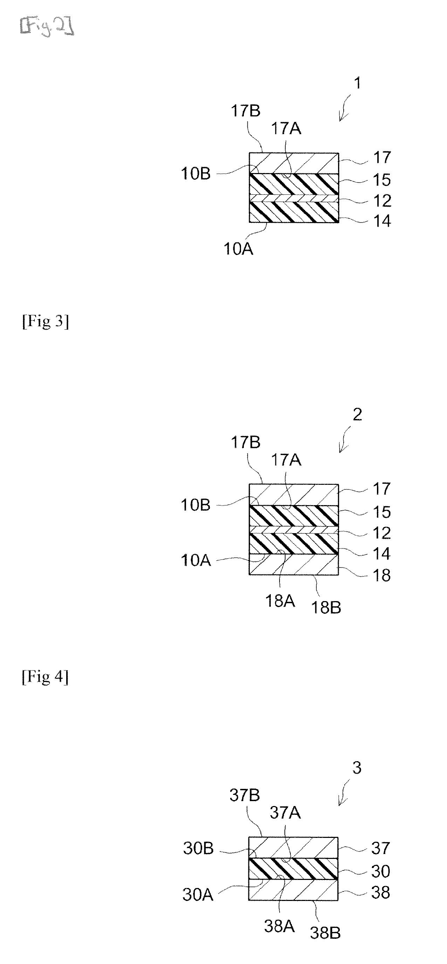

A typical example of the configuration of a PSA sheet having such a mark is shown in FIGS. 1 and 2. This PSA sheet 1 is a double-sided PSA sheet (double-sided PSA sheet with substrate) in the form of a long sheet having first and second PSA layers 14 and 15 on both sides of a sheet-shaped substrate (non-releasing substrate such as a non-woven fabric) 12 of which both sides are non-releasing, and in which a release liner 17 is laminated onto the second PSA layer 15, and is formed into the form of a roll wound in the lengthwise direction thereof. Both surfaces 17A and 17B of the release liner 17 are release surfaces (surfaces having releasability). The front surface 17A of the release liner 17 is arranged on a back surface (second PSA surface) 10B of the double-sided PSA sheet 10, and the second PSA surface 10B is protected by the release liner 17 as a result thereof. When in the form of a roll as described above, the front surface (first PSA surface) 10A of the double-sided PSA sheet contacts the back surface 17B of the release liner 17, and the first PSA surface 10A is also protected by the release liner 17 as a result thereof. The PSA sheet 1 is wound so that the back surface 17B of the release liner 17 is on the outside. Characters (mark) 16 consisting of "Low VOCs", indicating that the PSA sheet 1 has low VOC specifications, are displayed in green and/or blue on this back surface 17B (namely, the outer surface of the roll).

The PSA sheet 1 is used, for example, in the manner described below. Namely, as shown in FIG. 1, one end of the PSA sheet 1 is first pulled out from the rolled state described above, and the exposed first PSA surface 10A is contacted with a first adherend followed by pressing the back surface 17B of the release liner 17 onto the adherend (by pressing with a hand roller, for example) to adhere the PSA sheet 1 to the first adherend. Here, since the characters 16 indicating low VOC specifications as previously described are displayed on the back surface 17B of the release liner 17, adhesion work can proceed while confirming that the PSA sheet 1 has low VOC specifications. Subsequently, the release liner 17 is peeled from the PSA sheet 1 adhered to the first adherend to expose the second PSA surface 10B, followed by pressing a second adherend onto the second PSA surface 10B to adhere the PSA sheet 1 to the second adherend. In this manner, the first adherend and the second adherend can be joined through the PSA sheet 1.

The PSA sheet provided by the present invention can also have a cross-sectional structure shown in FIGS. 3 to 7. The PSA sheet 2 shown in FIG. 3 is further provided with a release liner 18 that protects the first PSA surface 10A in the PSA sheet 1 having the cross-sectional structure shown in FIG. 2. In the release layer 18, at least the front surface 18A is a release surface, and the front surface 18A is arranged on the first PSA surface 10A. The back surface 18B of the release liner 18 may be a release surface or a non-releasing surface. In addition, the PSA sheet 2 may be in the form of an individual sheet or in the form of a roll wound in the lengthwise direction thereof. The back surface 17B of the release liner (support sheet) 17 that composes the PSA sheet 2 may be a release surface or a non-releasing surface. Characters 16 similar to those of the PSA sheet 1 (see FIG. 1) are displayed in green and/or blue on this back surface 17B. The release liner 18 arranged on the first PSA surface 10A is peeled off, the first PSA surface 10A exposed as a result thereof is contacted with a first adherend, and the back surface 17B of the release liner 17 is pressed onto the adherend to enable the PSA sheet 2 to be adhered to the first adherend while confirming that the PSA sheet 2 has low VOC specifications.

A PSA sheet 3 shown in FIG. 4 is in the form of a double-sided PSA sheet not having a non-releasing substrate (substrate-free), and has a configuration in which both sides 30A and 30B of a PSA layer 30 are respectively protected by release liners 37 and 38. At least the surfaces (front surfaces) 37A and 38A on the side of the PSA layer of the release liners 37 and 38 are release surfaces. The back surfaces 37B and 38B of the release liners 37 and 38 may be release surfaces or non-releasing surfaces. The form of the PSA sheet 3 may in the form of a roll or an individual sheet. The characters 16 (see FIG. 1) similar to those of the PSA sheet 1 are displayed in green and/or blue on the back surface 37B of the release liner 37 arranged on the back surface (second PSA surface) 30B of the PSA layer 30. By peeling off the release liner 38 arranged on the first PSA surface 30A, contacting the first PSA surface 30A exposed as a result thereof with a first adherend, and pressing the back surface 37B of the release liner 37 against the first adherend, the PSA sheet 3 can be adhered to the first adherend while confirming that the PSA sheet 3 has low VOC specifications.

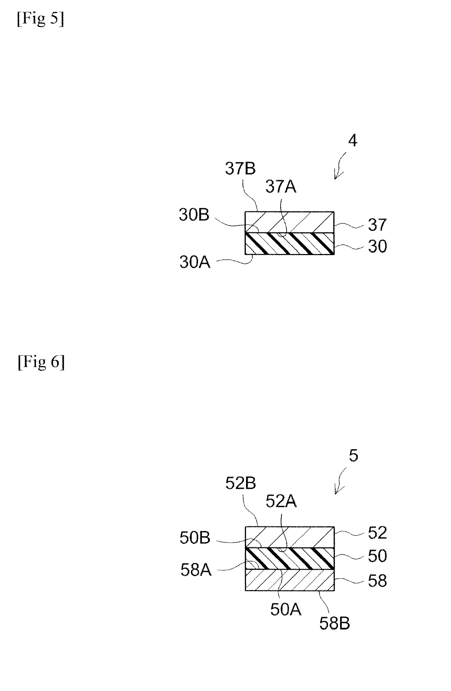

In the PSA sheet 4 shown in FIG. 5, the release liner 37, of which both surfaces 37A and 37B are release surfaces, is arranged on the back surface (second PSA surface) 30B of the PSA layer 30 in the same manner as the PSA sheet 3. The front surface 37A of the release liner 37 contacts the second PSA surface 30B, and the second PSA surface 30B is protected as a result thereof. When this is wound, a configuration can be adopted in which the first PSA surface 30A is also protected by the release liner 37 as a result of the first PSA surface 30A contacting the back surface 37B of the release liner 37. This PSA sheet 4 is typically provided as a rolled product in which a long release liner 37 and the PSA layer 30 are wound in the lengthwise direction with the back surface 37B of the release liner 37 on the outside. Characters 16 (see FIG. 1) similar to those of the PSA sheet 1 are displayed in green and/or blue on the back surface 37B. By contacting the first PSA surface 30A with a first adherend and pressing the back surface 37B of the release liner 37 onto the adherend, the double-sided PSA sheet 4 can be adhered to the first adherend while confirming that the PSA sheet 4 has low VOC specifications.

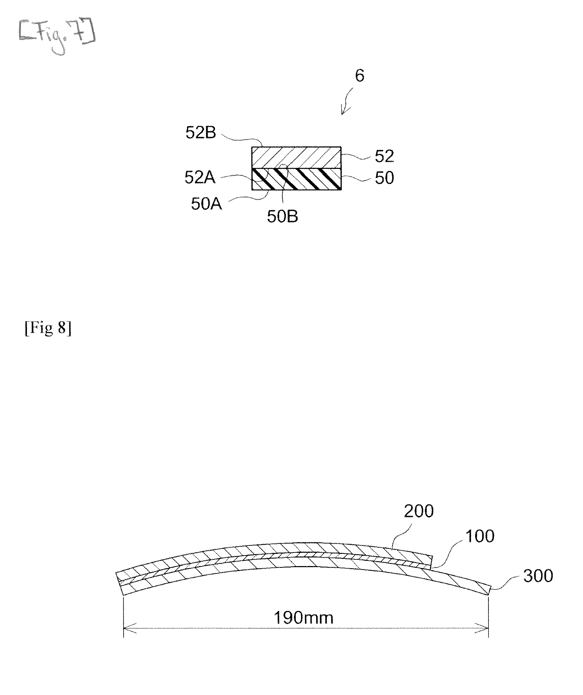

In contrast to the above-mentioned PSA sheets 1 to 4 being examples of the configuration of a double-sided PSA sheet, PSA sheets 5 and 6 shown in FIGS. 6 and 7 are examples of PSA sheets of the single-sided PSA type. In the PSA sheet 5 shown in FIG. 6, a back surface 50B of a PSA layer 50 is joined to a support substrate 52 of which at least a front surface (surface on the side of the PSA layer) 52A is a non-releasing surface. A front surface (PSA surface) 50A of the PSA layer 50 is protected by a release liner 58 of which at least a front surface (surface on the side of the PSA layer) 58A is a release surface. A back surface 58B of the release liner 58 may be a release surface or a non-releasing surface. This PSA sheet 5 may be in the form of an individual sheet or may be in the form of a roll wound in the lengthwise direction. The back surface 52B of the support substrate 52 may be a release surface or a non-releasing surface. Characters 16 (see FIG 1) similar to those of the PSA sheet 1 are displayed in green and/or blue on the back surface 52B. By peeling the release liner 58 arranged on the front surface (PSA surface) 50A of the PSA layer 50, contacting the PSA layer 50A exposed as a result thereof with an adherend, and pressing the back surface 52B of the support substrate 52 against the adherend, the PSA sheet 5 can be adhered to adherend while confirming that the PSA sheet 5 has low VOC specifications.

In the PSA product 6 shown in FIG. 7, the back surface 50B of the PSA layer 50 is joined to the support substrate 52, of which the front surface 52A is a non-releasing surface and the back surface 52B is a release surface, in the same manner as the PSA sheet 5. When this is wound, the PSA surface 50A is protected by contacting the back surface 52B of the support substrate 52. Namely, in the configuration shown in FIG. 7, the support substrate 52 functions as a release liner, and in the form of a roll as previously described, the front surface 52A of the PSA layer 50 is arranged on the back surface (release surface) 52B of the support substrate 52. The PSA sheet 6 is provided as a product in the form of a roll in which a long PSA sheet is wound in the lengthwise direction with the back surface 52B of the support substrate 52 on the outside. Characters 16 (see FIG. 1) similar to those of the PSA sheet 1 are displayed in green and/or blue on the back surface (release surface) 52B. By contacting the PSA surface 50A with an adherend and pressing the back surface 52B of the support substrate 52 against the adherend, the PSA sheet 6 can be adhered to the adherend while confirming that the PSA sheet 6 has low VOC specifications.

The mark preferably consists of characters, figures, symbols or a combination thereof (to also be collectively referred to as characters) indicating low emission of VOC (namely, low VOC) and a combination of the above-mentioned colors. As a result thereof, a PSA product can be further confirmed to have low VOC specifications from information (displayed contents) indicated by not only color but by characters as well.

The color of the mark is preferably green. This is because the color green is highly effective in being associated with environmental friendliness. In addition, the area occupied by the mark (not including portions having the same color as the base) among the total area of the back of the support sheet is preferably within the range of 5% or more. In a preferable aspect, the area of the mark is within the range of 5% to 80%. Making the area of the mark to be within this range enhances display effects.

Furthermore, the mark "being displayed on the back surface of the PSA sheet" means that the mark is legible when the PSA sheet is viewed from the back side of the release liner and substrate (to also be collectively referred to as the "release liner"), and there are no limitations on the manner in which mark is attached to the back surface of the release liner from the outside (such as a form in which the mark is printed onto the back surface of the release liner). For example, in the case of a release liner having a laminated structure, the mark may be printed onto the back surface of any of the layers, and one or two or more transparent or translucent layers may be provided on that back surface. There are no particular limitations on the method used to provide the mark. Normally, the mark is preferably provided by using a printing method. Various known or commonly used methods can be suitably employed for the printing method, examples of which include offset printing, silk screen printing, relief printing, flexographic printing and gravure printing.

The mark typically consists of a combination of green and/or blue coloring and characters (namely, characters, figures, symbols or a combination thereof), and the mark can also combine three-dimensional shapes. In a preferable aspect, information relating to low VOC (and typically, information indicating that the PSA product incorporates VOC countermeasures) is at least included in the information indicated by the characters and the like. As a result of combining characters indicating information relating to low VOC with green and/or blue coloring, the resulting mark is able to more effectively convey the information to a viewer. The information relating to low VOC can consist of characters concisely indicating low VOC specifications (and typically, an expression consisting of one, two or more words conveying the meaning of "low VOC" as in the characters 16 shown in FIG. 1), that in which the characters have been graphically designed to various degrees, a known mark indicating low VOC, characters specifically indicating the emission level of an organic compound (such as the level of toluene emission or TVOC emission), or a combination of one, two or more types thereof.

Examples of information indicated by the characters and the like further include product name, manufacturer's name, specifications (information relating to specifications other than low VOC or more detailed information relating to low VOC specifications), usage method, recycling information, manufacturing date, serial number (lot number), expiration date, service life, logo mark, materials or types of product constituent elements (such as the PSA, release liner or non-releasing substrate), types of contained components and their contents. Examples of the above-mentioned recycling information include names of materials, recycle marks, contents relating to whether or not the substrate and PSA of double-sided PSA tape can be recycled, information relating to disposal method, and contents relating to whether or not constituent elements of the PSA sheet (such as the release liner) can be incinerated. Preferable examples of indicated information in addition to information relating to low VOC include an indication that the PSA sheet has been subjected to environmental countermeasures (such as that indicating that at least a portion of the constituent elements of the PSA sheet can be incinerated or that they can be decomposed by burying in the ground), and an indication that the PSA sheet has been produced using a non-toluene-based PSA composition. The characters and the like used to indicate this information can be a mark that more effectively conveys that information to a viewer by combining with green and/or blue coloring.

Furthermore, in the technology disclosed herein, "blue color" refers to that for which the visible spectrum wavelength range is 360 nm to less than 480 nm, while "green color" refers to that for which the visible spectrum wavelength range of 480 nm to less than 560 nm. The color that composes the mark may be one type of color or two or more types of colors differing with respect to at least one of hue, brightness and saturation. From the viewpoint of production cost, a mark composed of one type of color (and particularly preferably, green color) is preferable. The color of the portion of the back surface of the release liner other than the mark (base color) is preferably a color that facilitates distinction of the shape of the mark. In order to enhance the distinctiveness of the mark, it is advantageous to use for the base color a color that differs considerably from the color that composes the mark with respect to one of at least hue, brightness and saturation. For example, a bright, light color in the manner of white, cream or yellow is preferably used for the base color. From the viewpoint of production cost, the base color is preferably white. In addition, in the case of using paper (such as wood-free paper or glassine paper) for the release liner and the like to which the mark is affixed, or in the case of using paper in which a transparent or translucent resin (such as polyethylene) is laminated onto at least one side thereof, the color of the release liner per se can be preferably used for the base color.

The size of the mark is preferably 1 mm x 1 mm or more, more preferably 1.5 mm x 1.5 mm or more, and even more preferably 2 mm x 2 mm or more. In the case the mark contains characters (including the case of consisting of characters only), at least half of the characters preferably have a size of 1 mm × 1 mm or more (more preferably 1.5 mm × 1.5 mm or more and even more preferably 2 mm × 2 mm or more). If the size of the mark is excessively small, the efficiency of conveying information with the characters and the like tends to decrease. Although there are no particular limitations on the upper limit of the size of the mark, in consideration of applications of the PSA sheet, the size is to be that which enables information indicated by the characters and the like to be able to be recognized at the time of actual use (such as during lamination work).

The colors that compose the mark typically consists of green and/or blue only (and preferably green only), or consist of green and/or blue color (and preferably green color) and the base color. The ratio of the surface area occupied by the mark to the surface area of the back side of the release liner and the like (but not including the surface area of portions having the same color as the base color) can be, for example, 5% or more (and typically, 5% to 80%), preferably 5% to 60%, and even more preferably 5% to 50%. If the ratio of the surface area occupied by the mark is excessively small, each mark becomes excessively small and illegible, or locations can occur at the time of use where the mark is not present due to the spacing at which the marks are arranged being excessively wide. On the other hand, if the ratio of the surface area occupied by the mark is excessively large, it becomes difficult to determine what is written (decrease in distinctiveness of characters and the like).

The release liner of the PSA sheet disclosed herein includes a substrate and a release layer (releasable film) imparted to at least a first side thereof (may be the back surface of the support substrate). Here, the release layer is formed using a silicone-based release agent so that the transferred amount of silicone as measured according to the above-mentioned method is 10 kcps or less. Examples of silicone-based release agents capable of realizing this transferred amount of silicone include heat-curable silicone-based release agents and ionizing radiation-curable silicone-based release agents that are cured by imparting heat or ionizing radiation (such as ultraviolet rays, α rays, β rays, γ rays, neutron beam or electron beam) after coating. One type of these silicone-based release agents can be used alone or two or more types can be used in combination. Heat-curable silicone-based release agents are used preferably from viewpoints such as economy and simplicity of the device required for coating.
In addition, these release agents may be solvent-free types that do not contain solvent or solvent types in which the release agent is dissolved or dispersed in an organic solvent. In addition, solvent-free release agents may also be used for which viscosity has been adjusted to facilitate application (and typically coating) by mixing with a suitable amount of a solvent having comparatively low surface tension. From the viewpoints of environmental health during release layer formation and further reducing the TVOC emission, a solvent-free silicone-based release agent that is substantially free of organic solvent and can be coated without modification is used preferably.

The above-mentioned heat-curable silicone-based release agents ordinarily contain organohydrogenpolysiloxane and organopolysiloxane having unsaturated aliphatic groups, and may be of the solvent-free type or solvent type. A thermal addition reaction-curable silicone-based release agent that is cured by undergoing crosslinking by a thermal addition reaction is used particularly preferably.

Examples of such thermal addition reaction-curable silicone-based release agents that can be used include a release agent containing: a polysiloxane having hydrogen atoms (H) bonded to silicone atoms (Si) in a molecule thereof (Si-H group-containing polysiloxane); and, a polysiloxane containing functional groups (Si-H group-reactive functional groups) having reactivity with Si-H bonds (Si-H covalent bonds) in a molecule thereof (Si-H group-reactive polysiloxane). This release agent can be cured by crosslinking Si-H groups with Si-H group-reactive functional groups by an addition reaction.

In the above-mentioned Si-H group-containing polysiloxane, Si bonded to H may be Si present in the main chain or Si present in a side chain. Polysiloxanes containing two or more Si-H groups in a molecule thereof are preferable. Examples of polysiloxanes having two or more Si-H groups in a molecule thereof include dimethylhydrogensiloxane-based polymers such as poly(dimethylsiloxane-methylsiloxane).

On the other hand, polysiloxanes of a form in which an Si-H group-reactive functional group or side chain containing such functional group is bonded to Si that forms the main chain (backbone) of the siloxane-based polymer (such as Si on the end of the main chain or Si within the main chain) can be used for the above-mentioned Si-H group-reactive polysiloxane. In particular, polysiloxanes in which a Si-H group-reactive functional group is bonded directly to Si of the main chain are preferable. In addition, polysiloxanes containing two or more Si-H group-reactive functional groups in a molecule thereof are preferable. Examples of Si-H group-reactive functional groups include alkenyl groups such as a vinyl group or hexenyl group.
Examples of siloxane-based polymers that form the above-mentioned main chain portion include polydialkylsiloxanes such as polydimethylsiloxane, polydiethylsiloxane or polymethylethylsiloxane (in which the two alkyl groups may be the same or different), and polymers obtained by polymerizing a plurality of Si-containing monomers such as polyalkylarylsiloxane or poly(dimethylsiloxane-methylsiloxane). A particularly preferable example of a main chain polymer is polydimethylsiloxane.

A thermal addition reaction-curable silicone release agent that contains a polysiloxane containing two or more Si-H groups in a molecule thereof and a polysiloxane containing two or more Si-H group-reactive functional groups in a molecule thereof is used particularly preferably.

Although there are no particular limitations on the mixing ratio of Si-H group-containing polysiloxane and Si-H group-reactive polysiloxane contained in the above-mentioned release agent provided it is within a range in which the release agent is adequately cured and the above-mentioned transferred amount of silicone can be realized, it is preferably selected such that the number of moles X of Si of Si-H groups and the number of moles Y of Si-H group-reactive functional groups is such that X ≥ Y, and normally is such that X:Y is about 1:1 to 2:1 (and more preferably 1.2:1 to 1.6:1).

In addition, a catalyst for accelerating the crosslinking reaction may be added to the heat-curable silicone-based release agent as described above. Examples of such catalysts include platinum-based catalysts such as platinum microparticles, chloroplatinic acid and derivatives thereof. Although there are no particular limitations on the amount of catalyst added, it is selected from, for example, a preferable range of 0.1 ppm to 1000 ppm (and more preferably 1 ppm to 100 ppm) based on the Si-H group-reactive polysiloxane.

Mixtures obtained by suitably preparing or acquiring the components described above or commercially available products containing the components described above can be used for the heat-curable silicone-based release agent. In addition to the components described above, known, commonly used additives may also be suitably added as necessary, examples of which include fillers, antistatic agents, antioxidants, ultraviolet absorbers, plasticizers or colorants (such as dyes or pigments).

On the other hand, a solvent-free type or solvent type can be used for the above-mentioned ionizing radiation-curable silicone-based release agent. UV-curable silicone-based release agents that are cured by undergoing a crosslinking reaction by irradiation with ultraviolet (UV) light are used particularly preferably.

Examples of UV-curable silicone-based release agents that can be used include release agents that are cured by undergoing a chemical reaction such as cationic polymerization, radical polymerization, radical addition polymerization or hydrosilylation by being irradiated with UV light. UV-curable silicone-based release agents that are cured by cationic polymerization are used particularly preferably.

As for such cationic-polymerizable UV-curable silicone-based release agent, can be used release agents that contain an epoxy group-containing polysiloxane, of a form in which at least two epoxy groups are bonded to Si that forms the main chain (backbone) of a siloxane-based polymer (such as Si on the end of the main chain or Si within the main chain) and/or to Si contained in a side chain either directly or through a divalent group (including groups such as a methylene group, ethylene group or other alkylene group and an ethyleneoxy group, propyleneoxy group or other alkyleneoxy group). The type of bonding of the at least two epoxy groups to Si may be the same or different. In other words, polysiloxanes containing two or more side chains that contain one type or two or more types of epoxy groups are used. Examples of epoxy group-containing side chains include glycidyl, glycidoxy (glydicyloxy), 3,4-epoxycyclohexyl and 2,3-epoxycyclopentyl groups. The epoxy group-containing polysiloxane may be linear, branched or consist of a mixture thereof.

An epoxy group-containing polysiloxane as described above may be suitably prepared in accordance with conventional known methods, or a commercially available product containing such an epoxy group-containing polysiloxane can be used for the UV-curable silicone-based release agent. An example of a synthesis method that can be used to prepare the epoxy group-containing polysiloxane consists of carrying out an addition reaction of an olefin-based epoxy monomer such as 4-vinylcyclohexene oxide, allyl glycidyl ether or 7-epoxy-1-octen on polymethylhydrogensiloxane as a base polymer using a platinum-based catalyst.

The above-mentioned cationic-polymerizable UV-curable silicone-based release agent may have a composition that contains one type or two or more types of an onium salt-based UV cleavage-type initiator (onium salt-based photopolymerization initiator) as a UV cleavage-type initiator (photopolymerization initiator) in addition to the polysiloxane described above. Examples of an onium salt-based UV cleavage-type initiator that can be used include onium salt-based UV cleavage-type initiators described in, for example, Japanese Patent Application Publication Nos. H6-32873, 2000-281965, H11-228702 and Japanese Examined Patent Application Publication No. H8-26120. Specific examples include diaryliodinium salts, triarylsulfonium salts, triarylselenonium salts, tetraarylphosphonium salts and aryldiazonium salts. Diaryliodinium salts are used particularly preferably.

Examples of diaryliodinium salts include salts represented by the general formula: [Y₂I]⁺X⁻. Similarly, examples of triarylsulfonium salts, triarylselenonium salts, tetraarylphosphonium salts and aryldiazonium salts include salts represented by general formulas [Y₃S]⁺X⁻, [Y₃Se]⁺X⁻, [Y₄P]⁺X⁻ and [YN₂]⁺X⁻, respectively. Here, Y represents an optionally substituted aryl group, I represents an iodine atom and X⁻ represents a non-nucleophilic and non-basic anion. In addition, S, Se, P and N represent a sulfur atom, selenium atom, phosphorous atom and nitrogen atom, respectively.

Specific examples of the above-mentioned anion (X⁻) include SbF₆⁻, SbCl₆⁻, BF₄⁻, [B(C₆F₅)₄]⁻, [B(C₆H₄CF₃)₄]⁻, [(C₆F₅)2BF₂]⁻, [C₆F₅BF₃]⁻, [B(C₆H₃F₂)₄]⁻, AsF₆⁻, PF₆⁻, HSO₄⁻ and ClO₄⁻. In particular, anions containing elementary antimony (Sb) and anions containing elementary boron (B) are preferable. Particularly preferable examples of onium salts include Sb-containing diaryliodinium salts and B-containing diaryliodinium salts.

Although there are no particular limitations on the amount of UV cleavage-type initiator contained in the above-mentioned cationic-polymerizable UV-curable silicone-based release agent provided it is within a range that allows the initiator to function as a catalyst, it is preferably, for example, about 0.1 parts by weight to 8 parts by weight (more preferably 0.3 parts by weight to 5 parts by weight and even more preferably 0.5 parts by weight to 3 parts by weight) based on 100 parts by weight of the epoxy group-containing polysiloxane.

A UV-curable silicone-based release agent obtained by suitably preparing or acquiring and mixing the components described above, or a commercially available product containing the components described above can be used for the UV-curable silicone-based release agent. In addition, other known, commonly used additives may also be suitably added as necessary in addition to the above-mentioned components, examples of which include fillers, antistatic agents, antioxidants, UV absorbers, plasticizers or colorants (such as dyes or pigments).

There are no particular limitations on the material of the substrate (substrate for the release liner) that holds the release layer composed of the above-mentioned silicone-based release agent. For example, a single-layer material or multi-layer material formed from plastic, paper or various types of fibers and the like can be used as the substrate.
Examples of the above-mentioned plastic substrates that can be used include film-shaped substrates composed of polyolefins such as polyethylene (PE) or polypropylene (PP), polyesters such as polyethylene terephthalate (PET), polyethylene naphthalate (PEN) or polybutylene terephthalate (PBT), polyamides (so-called nylons) or cellulose (such as cellophanes). The plastic films may be of the non-oriented type or oriented type (including uniaxially and biaxially oriented types).
Examples of paper substrates that can be used include those using Washi paper, ordinary paper, wood-free paper, glassine paper, kraft paper, full pack paper, crepe paper, clay coated paper, top coated paper and synthetic paper. Although there are no particular limitations on the grammage of the paper substrate, normally that having a grammage of about 50 g/m² to 100 g/m² is used suitably.

Examples of various types of fibrous substrates include woven and non-woven fabric obtained by spinning one type of a mixture of various types of fibrous substances (that may be natural fibers, semi-synthetic fibers or synthetic fibers, examples of which include cotton fiber, staple fiber, manila hemp, pulp, rayon, acetate fiber, polyester fiber, polyvinyl alcohol fiber, polyamide fiber and polyolefin fiber).
Examples of substrates composed of other materials include rubber sheets such as natural rubber or butyl rubber, foamed sheets composed of foamed materials such as polyurethane foam or polychloroprene rubber foam, metal foil such as aluminum foil or copper foil, and composites thereof.

A release liner in which polyethylene has been laminated on at least the front surface (surface on the side of the PSA layer) of paper (preferably wood-free paper or glassine paper), and in which release treatment (silicone treatment) using a silicone-based release agent has been carried out on the surface thereof, can be preferably used for the release liner in the technology disclosed herein.

Various types of surface modification treatment such as corona discharge treatment, plasma treatment or application of a primer or various types of surface processing such as embossing may be carried out as necessary on the surface of the release liner substrate provided with a release layer. In addition, various types of additives such as fillers (including inorganic and organic fillers), anti-aging agents, antioxidants, ultraviolet absorbers, antistatic agents, lubricants, plasticizers or colorants (including pigments and dyes) may also be incorporated as necessary.
The thickness of the release liner is preferably about 50 µm to 200 µm (and more preferably 60 µm to 160 µm).

A conventionally known method can be employed as a method for imparting the release layer to the release liner. For example, the release layer can be formed by coating and drying a silicone-based release agent as described above onto a substrate using various types of coaters. Examples of coaters that can be suitably selected include a direct gravure coater, offset gravure coater, roll coater, bar coater and die coater.

Although there are no particular limitations on the thickness of the release layer, the coated thickness can be, for example, about 0.03 µm to 5 µm (and preferably 0.05 µm to 3 µm). If the thickness of the release layer is less than the above-mentioned range, adequate release properties are less likely to be obtained. If the thickness of the release layer exceeds the above-mentioned range, there may be cases in which the transferred amount of silicone increases due to the presence of residual uncured substances.
Although the coated amount of the release agent can be suitably set corresponding to the type of adhesive used, type of liner substrate or type of release agent and the like, the coated amount can be, based on the solid content, for example, about 0.01 g/m² to 10 g/m² (preferably 0.05 g/m² to 5 g/m², more preferably 0.5 g/m² to 5 g/m² and even more preferably 0.5 g/m² to 4 g/m²).

Normally, the release agent is dried after being imparted to the substrate. There are no particular limitations on drying conditions, and drying conditions suitably for the release agent used can be suitably selected. Typically, the release layer is dried at a temperature of about 80°C to 150°C. In the case of using a heat-curable release agent, for example, the drying step and the curing step can be carried out simultaneously by drying while heating. In addition, the release agent may be cured by heating after air-drying. In addition, in the case of using an ionizing radiation-curable silicone release agent as well, the drying step and the curing step can be allowed to proceed simultaneously by simultaneously carrying out heating and ionizing radiation. In addition, the curing step can also be carried out after carrying out the drying step. These steps can be carried out by suitably selecting and employing a drying method and curing method suitable for the release agent used from conventionally known methods. Conditions relating to formation of the release layer can be suitably set so that the target transferred amount of silicone is realized.
Thus, matters disclosed according to this description include a production method of a PSA sheet that includes:
the formation of a release layer composed of a silicone-based release agent on at least a first side of a release liner substrate, wherein, the release layer is formed such that the amount of silicone that transfers to Single-Sided Adhesive Tape No. 31B manufactured by Nitto Denko Corporation per unit surface area equivalent to a circle having a diameter of 30 mm is 10 kcps or less when determined as X-ray intensity of silicon (Si) by X-ray fluorescence analysis; and
A PSA layer containing an acrylic polymer synthesized in ethyl acetate as an adhesive component is provided on the release layer.

The transferred amount of silicone in the technology disclosed herein can be measured by fluorescence X-ray analysis according to the previously described method. Fluorescence X-ray analysis can be carried out using an XRF analyzer. A commercially available product can be preferably used for the XRF analyzer. Although a crystal spectrometer can also be suitably selected and used, Si-Kα, for example, can be used preferably. In addition, although the output setting and the like can be suitably selected corresponding to the apparatus used, adequate sensitivity can normally be obtained at an output of about 50 kV and 70 mA, for example.

The PSA layer laminated onto the above-mentioned release layer is formed from a solvent-type PSA composition of a form in which a PSA component is dispersed or dissolved (and typically, dissolved) in a non-toluene-based organic solvent such as ethyl acetate (namely, a non-toluene-based solvent, and typically a solvent that is substantially free of toluene). In a preferable aspect of the technology disclosed herein, the non-toluene-based organic solvent is ethyl acetate. In other words, the solvent-type PSA composition contains an ethyl acetate solution of an acrylic polymer. In a typical aspect of the technology disclosed herein, the acrylic polymer is used as a base polymer of a PSA that composes the PSA layer (basic component of PSA). Here, a base polymer refers to a polymer that serves as the basic component of the PSA, and typically is the main component among polymer components contained in the PSA. For example, 50% by weight or more of the PSA is preferably the above-mentioned acrylic polymer. An acrylic polymer having an alkyl (meth)acrylate for the main constituent monomer component (monomer main component, or in other words, the component that accounts for 50% by weight or more of the total amount of monomer that composes the acrylic polymer) can be preferably employed for the acrylic polymer.

In the present description, "(meth)acrylate" refers to acrylate and methacrylate, inclusively. Similarly, "(meth)aryloyl" refers to acryloyl and methacryloyl, inclusively, while "(meth)acrylic" refers to acrylic and methacrylic, inclusively.

A compound represented by the following formula (1) can be preferably used as alkyl (meth)acrylate.

CH₂=C(R¹)COOR² (1)

Here, R¹ in the above formula (1) represents a hydrogen atom or methyl group. In addition, R² represents an alkyl group with 1 to 20 carbon atoms. Specific examples of R² include alkyl groups such as a methyl group, ethyl group, propyl group, isopropyl group, butyl group, isobutyl group, s-butyl group, t-butyl group, pentyl group, isoamyl group, neopentyl group, hexyl group, heptyl group, octyl group, isooctyl group, 2-ethylhexyl group, nonyl group, isononyl group, decyl group, isodecyl group, undecyl group, dodecyl group, tridecyl group, tetradecyl group, pentadecyl group, hexadecyl group, heptadecyl group, octadecyl group, nonadecyl group or eicosyl group. From the viewpoint of the storage modulus of the PSA, an alkyl (meth)acrylates in which R² is an alkyl group with 2 to 14 carbon atoms (this range of the number of carbon atoms may be hereinafter abbreviated as "C₂₋₁₄") are preferable, while alkyl (meth)acrylates in which R² is a C₂₋₁₀ alkyl group are more preferable.

Examples of alkyl (meth)acrylates having a C₂₋₁₄ alkyl group as described above include ethyl (meth)acrylate, propyl (meth)acrylate, isopropyl (meth)acrylate, butyl (meth)acrylate, isobutyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate and tetradecyl (meth)acrylate. Particularly preferable examples of alkyl (meth)acrylates include butyl acrylate (BA) and 2-ethylhexyl acrylate (2EHA).

In a preferable aspect, about 50% by weight or more of the total amount of alkyl (meth)acrylate used to synthesize the acrylic polymer (more preferably 70% by weight or more and, for example, about 90% by weight or more) is an alkyl (meth)acrylate in which R² in the above-mentioned formula (1) represents a C₂₋₁₄ (preferably C₂₋₁₀ and more preferably C₄₋₈) alkyl group. According to such a monomer composition, an acrylic polymer is easily obtained in which the storage modulus in the vicinity of room temperature becomes a preferable range for use as a PSA. Substantially all of the alkyl (meth)acrylate used may be C₂₋₁₄ alkyl (meth)acrylate.

The alkyl (meth)acrylate that composes the acrylic polymer in the technology disclosed herein may be BA alone, 2EHA alone, or a combination of two types of alkyl (meth)acrylates consisting of BA and 2EHA. In the case of using a combination of BA and 2EHA for the alkyl (meth)acrylate, there are no particular limitations on the ratio at which they are used. For example, a ratio in which roughly 10% by weight or more (for example, about 10% by weight to 40% by weight) of the total amount of BA and 2EHA is 2EHA can be used preferably.

Another monomer capable of polymerizing with the alkyl (meth)acrylate (which may also be referred to as a "copolymerizable monomer component" hereinafter) may also be used as a monomer component that composes the acrylic polymer within a range in which the alkyl (meth)acrylate is still the main component. The ratio of the alkyl (meth)acrylate to the total amount of monomer components that compose the acrylic polymer can be about 80% by weight or more (and typically, 80% by weight to 99.8% by weight), and is preferably 85% by weight or more (for example, 85% by weight to 99.5% by weight). The ratio of the alkyl (meth)acrylate may also be 90% by weight or more (for example, 90% by weight to 99% by weight).

The above-mentioned copolymerizable monomer component can be useful for introducing crosslinking sites into the acrylic polymer or for enhancing the cohesive strength of the acrylic polymer. This copolymerizable monomer can be used alone or two or more types can be used in combination.

More specifically, monomer components containing various types of functional groups can be used as a copolymerizable monomer component for introducing crosslinking sites into the acrylic polymer (and typically, monomer components containing a heat-crosslinkable functional group for introducing crosslinking sites that are crosslinked by heat into the acrylic polymer). The use of a monomer component containing such functional groups makes it possible to improve adhesive strength to an adherend. There are no particular limitations on the monomer component containing such a functional group provided it can be copolymerized with the alkyl (meth)acrylate and is able to provide functional groups that serve as crosslinking sites. For example, a functional group-containing monomer such as a carboxyl group-containing monomer, hydroxyl group-containing monomer, amide group-containing monomer, amino group-containing monomer, epoxy-group containing monomer, cyano group-containing monomer, keto group-containing monomer, monomer having a nitrogen atom-containing ring or alkoxysilyl group-containing monomer can be used alone or as a combination of two or more types thereof.

Examples of carboxyl group-containing monomers include ethylenic unsaturated monocarboxylic acids such as acrylic acid, methacrylic acid or crotic acid, ethylenic unsaturated dicarboxylic acids such as maleic acid, itaconic acid or citraconic acid, and anhydrides thereof (such as maleic anhydride or itaconic anhydride).
Examples of hydroxyl group-containing monomers include hydroxyalkyl (meth)acrylates such as 2-hydroxyethyl (meth)acrylate, 2-hydroxypropyl (meth)acrylate, 3-hydroxypropyl (meth)acrylate or 2-hydroxybutyl (meth)acrylate, and unsaturated alcohols such as vinyl alcohol or allyl alcohol.

Examples of amide group-containing monomers include (meth)acrylamide, N,N-dimethyl (meth)acrylamide, N-butyl (meth)acrylamide, N-methylol (meth)acrylamide, N-methylolpropane (meth)acrylamide, N-methoxymethyl (meth)acrylamide and N-butoxymethyl (meth)acrylamide.
Examples of amino group-containing monomers include aminoethyl (meth)acrylate, N,N-dimethylaminoethyl (meth)acrylate and t-butylaminoethyl (meth)acrylate.

Examples of epoxy group-containing monomers include glycidyl (meth)acrylate, methylglycidyl (meth)acrylate and allyl glycidyl ether.
Examples of cyano group-containing monomers include acrylonitrile and methacrylonitrile.
Examples of keto group-containing monomers include diacetone (meth)acrylamide, diacetone (meth)acrylate, vinyl methyl ketone, vinyl ethyl ketone, allyl acetoacetate and vinyl acetoacetate.

Examples of monomers having a nitrogen atom-containing ring include N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam and N-(meth)acryloylmorpholine.

Examples of alkoxysilyl group-containing monomers include 3-(meth)acryloxypropyl trimethoxysilane, 3-(meth)acryloxypropyl triethoxysilane, 3-acryloxypropyl triethoxysilane, 3-(meth)acryloxypropylmethyl dimethoxysilane and 3-(meth)acryloxypropylmethyl diethoxysilane.

Among these functional group-containing monomers, one type or two or more types of selected from carboxyl group-containing monomers or acid anhydrides thereof can be used preferably. Substantially all of the functional group-containing monomer component may be carboxyl group-containing monomer. Particularly preferable examples of carboxyl group-containing monomers include acrylic acid and methacrylic acid. One of these may be used alone or acrylic acid and methacrylic acid may be used in combination at an arbitrary ratio thereof.

The above-mentioned functional group-containing monomer component is preferably used within the range of, for example, about 10 parts by weight or less (for example, about 0.1 parts by weight to 10 parts by weight and preferably about 1 parts by weight to 5 parts by weight) to 100 parts by weight of alkyl (meth)acrylate. If the amount of the functional group-containing monomer component used is excessively large, cohesive strength becomes excessively high which can tend to cause a decrease in adhesion properties (such as adhesive strength).

Other copolymerizable components can be used in addition to the functional group-containing monomer described above in order to enhance cohesive strength of the acrylic polymer. Examples of this copolymerizable component include vinyl ester-based monomers such as vinyl acetate or vinyl propionate, aromatic vinyl compounds such as styrene, substituted styrene (such as α-methyl styrene) or vinyl toluene, non-aromatic ring-containing (meth)acrylates such as cycloalkyl (meth)acrylates (such as cyclohexyl (meth)acrylate or cyclopentyl di(meth)acrylate) or isobornyl (meth)acrylate, aromatic ring-containing (meth)acrylates such as aryl (meth)acrylates (such as phenyl (meth)acrylate, aryloxyalkyl (meth)acrylates (such as phenoxymethyl (meth)acrylate) or arylalkyl (meth)acrylates (such as benzyl (meth)acrylate), olefin-based monomers such as ethylene, propylene, isoprene, butadiene or isobutylene, chlorine-containing monomers such as vinyl chloride or vinylidene chloride, isocyanate group-containing monomers such as 2-(meth)acryloyloxyethyl isocyanate, alkoxy group-containing monomers such as methoxyethyl (meth)acrylate or ethoxyethyl (meth)acrylate, and vinyl ether-based monomers such as methyl vinyl ether or ethyl vinyl ether.

Other examples of copolymerizable monomer components include monomers having a plurality of functional groups in a molecule thereof Examples of such functional group-containing monomers include 1,6-hexanediol di(meth)acrylate, ethylene glycol di(meth)acrylate, diethylene glycol di(meth)acrylate, triethylene glycol di(meth)acrylate, tetraethylene glycol di(meth)acrylate, (poly)ethylene glycol di(meth)acrylate, propylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, glycerin di(meth)acrylate, epoxy acrylate, polyester acrylate, urethane acrylate, divinyl benzene, butyl di(meth)acrylate and hexyl di(meth)acrylate.

A known, commonly used method can be used to obtain an acrylic polymer by polymerizing such monomers. For example, an ethyl acetate solution of an acrylic polymer can be preferably prepared by dissolving a monomer starting material in ethyl acetate followed by polymerization.

A polymerization initiator can be suitably selected from known, commonly used polymerization initiators for use as a polymerization initiator used during polymerization corresponding to the type of polymerization method. For example, an azo polymerization initiator can be preferably used in an emulsion polymerization method. Specific examples of azo polymerization initiators include 2,2'-azobisisobutyronitrile (AIBN), 2,2'-azobis(2-methylpropionamidine) disulfate, 2,2'-azobis(2-amidinopropane) dihydrochloride, 2,2'-azobis[2-(5-methyl-2-imidazolin-2-yl)propane dihydrochloride, 2,2'-azobis(N,N'-dimethyleneisobutylamidine), 2,2'-azobis[N-(2-carboxyethyl)-2-methylpropionamidine] hydrate, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane) and dimethyl-2,2'-azobis(2-methylpropionate).

Other examples of polymerization initiators include persulfates such as potassium persulfate or ammonium persulfate, peroxide-based initiators such as benzoyl peroxide, t-butyl hydroperoxide, di-t-butyl peroxide, t-butylperoxybenzoate, dicumyl peroxide, 1,1-bis(t-butylperoxy)-3,3,5- trimethylcyclohexane, 1,1-bis(t-butylperoxy) cyclodecane or hydrogen peroxide, substituted ethane-based initiators such as phenyl-substituted ethane, and aromatic carbonyl compounds. Still other examples of polymerization initiators include redox initiators using a combination of peroxide and reducing agent. Examples of redox initiators include combinations of a peroxide and ascorbic acid (such as a combination of aqueous hydrogen peroxide and ascorbic acid), combinations of hydrogen peroxide and iron (II) salt (such as a combination of aqueous hydrogen peroxide and iron (II) salt), and combinations of persulfate and sodium bisulfite.

These polymerization initiators can be used alone or two or more types can be used in combination. The amount of polymerization initiator used is a normally used amount, and can be selected from a range of, for example, about 0.005 parts by weight to 1 part by weight (typically, 0.01 parts by weight to 1 part by weight) to 100 parts by weight of all monomer components. If the amount of polymerization initiator used is excessively large or excessively small, there are cases in which it may be difficult to obtain desired adhesion performance.

A chain transfer agent (which is also understood as a molecular weight regulator or polymerization regulator) can also be used as necessary during polymerization. A known or commonly used chain transfer agent can be used for the chain transfer agent, examples of which include mercaptans such as dodecylmereaptan(dodecanethiol), lauryl mercaptan, glycidyl mercaptan, 2-mercaptoethanol, mercaptoacetic acid, 2-ethylhexyl thioglycolate or 2,3-dimethylmercapto-1-propanol as well as α-methylstyrene dimer. These chain transfer agents can be used alone or two or more types can be used in combination. The amount of chain transfer agent used may be about the same as that used normally, and can be selected from, for example, a range of about 0.001 parts by weight to 0.5 parts by weight to 100 parts by weight of monomer starting material.

In a preferable aspect for polymerizing the monomer starting material in the technology disclosed herein, a polymerization reaction is carried out on the monomer starting material by supplying the monomer starting material and a solvent (as necessary) to a reaction vessel having a polymerization initiator, and maintaining the temperature of the system at a polymerization temperature higher than room temperature (preferably about 40°C to 80°C, and for example, about 50°C to 80°C). Subsequently, the contents of the reaction vessel (reaction liquid) are typically cooled to room temperature. For example, the entire amount of monomer starting material may be supplied all at once to a reaction vessel containing the entire amount of polymerization initiator, may be supplied continuously over a prescribed amount of time (continuous supply), or may be supplied by dividing into small increments at prescribed intervals (such as about 5 minutes to 60 minutes) (incremental supply).

In the case of supplying the monomer starting material continuously, the duration of the continuous supply is suitably about 1 hour to 8 hours, and preferably about 2 hours to 6 hours (for example, about 3 hours to 5 hours). In addition, in the case of supplying the monomer starting material incrementally, the duration of the time when the first monomer starting material fraction is supplied to the time the last monomer starting material fraction is supplied is suitably about 1 hour to 8 hours, and preferably about 2 hours to 6 hours (for example, about 3 hours to 5 hours).
Alternatively, at least a portion of the monomer starting material may be supplied to a reaction vessel containing a portion of the polymerization initiator, polymerization of the monomer starting material may be initialized, and then the remainder of the polymerization initiator may be supplied continuously over a prescribed amount of time or supplied incrementally at prescribed intervals.

Polymerization time (referring to the time during which polymerization of the monomer starting material is carried out, and can be understood to be the amount of time during which the system is maintained at the polymerization temperature following initiation of the polymerization reaction) can be suitably set corresponding to the type of polymerization initiator used, polymerization temperature, the forms in which the polymerization initiator and monomer starting material are supplied and the like. For example, the polymerization time can be about 2 hours to 12 hours, and from the viewpoint of productivity and the like, normally the polymerization time is preferably about 4 hours to 8 hours. In addition, the contents of the reaction vessel (reaction liquid) are preferably maintained at the polymerization temperature (to carry out so-called aging) during a prescribed amount of time after the entire amount of the monomer starting material has finished being supplied to the reaction vessel. As a result of carrying out this aging, the amount of monomer remaining in the reaction liquid is reduced, allowing the obtaining of an acrylic polymer capable of forming a PSA layer having a lower TVOC content. The duration of this aging can be, for example, about 30 minutes to 4 hours, and from the viewpoint of productivity and the like, normally the aging time is preferably about 1 hour to 3 hours. The polymerization time referred to here includes this aging time. Thus, polymerization time in the case of, for example, maintaining a reaction vessel containing the entire amount of polymerization initiator at the polymerization temperature, continuously supplying the entire amount of monomer starting material over the course of 4 hours, and then carrying out aging of the reaction liquid by continuing to maintain the polymerization temperature for 2 hours after having finished supplying the monomer starting material, is 6 hours. The polymerization temperature may be constant throughout the entire duration of the polymerization time, or the polymerization temperature may differ between one time period and another time period. For example, after supplying the monomer starting material at a prescribed polymerization temperature, aging may be carried out at a higher polymerization temperature.

In a preferable aspect, additional polymerization initiator is supplied to the contents of the reaction vessel (reaction liquid) after allowing an amount of time to pass after finishing supplying the monomer starting material to the reaction vessel. By supplying additional polymerization initiator (to be referred to as "additional initiator") in this manner, the amount of monomer remaining in the reaction liquid can be effectively reduced (typically, by promoting polymerization of the residual monomer). As a result thereof, an acrylic polymer can be obtained that allows the formation of a PSA layer having a lower TVOC content. The additional initiator used may be the same as or different from the polymerization initiator previously used in the polymerization reaction of the monomer starting material (namely, the polymerization initiator introduced into the reaction vessel prior to finishing supplying the monomer starting material; to be referred to as the "primary initiator"). A polymerization initiator (initiator selected from, for example, an azo polymerization initiator, persulfate or peroxide polymerization initiator) having a half-life temperature lower than that of the primary initiator (initiator selected from, for example, an azo polymerization initiator, persulfate or peroxide polymerization initiator) can be used preferably for the additional initiator that enables reduction of the amount of residual monomer to be carried out efficiently. In addition, a redox-type polymerization initiator is also preferably used for the additional initiator. For example, a redox-type polymerization initiator obtained by combining a peroxide (such as hydrogen peroxide) and ascorbic acid, a peroxide (such as hydrogen peroxide) and iron (II) salt or a persulfate (such as ammonium persulfate) and sodium bisulfite and the like can be used preferably. In particular, the combination of a peroxide (typically used in the form of aqueous hydrogen peroxide having a concentration of about 1% to 35%) and ascorbic acid is preferable since there is no formation of excessive residue following the redox reaction. There are no particular limitations on the amount of additional initiator used, and the amount of used can be selected from a range of, for example, about 0.005 part by weight to 1 part by weight to 100 parts by weight of monomer starting material.

The preferable timing at which the additional initiator is supplied (added) to the reaction liquid can also vary according to the type of additional initiator. The additional initiator is preferably supplied after allowing a certain period of time (typically, about 10 minutes to 4 hours, and for example, about 1 hour to 3 hours) to elapse after finishing supplying the monomer starting material to the reaction vessel and before the reaction liquid has finished cooling. For example, in the case of an additional initiator of the type that reduces the amount of residual monomer by forming radicals as a result of decomposing by heat (such as an azo polymerization initiator, persulfate or peroxide polymerization initiator), the additional initiator is preferably added at an intermediate point during the above-mentioned aging period (such as at the point about 30% to 95% of the aging period has elapsed). In addition, in the case of using a redox-type additional initiator, an aspect can be preferably employed in which the additional initiator is added at roughly the time of completion of the aging period (for example, an aspect in which cooling is started at about the same time as addition of the additional initiator), or at an intermediate point during cooling of the reaction liquid. As a result thereof, the amount of residual monomer can be effectively reduced while minimizing effects on productivity. Addition of the additional initiator may be carried out all at once, continuously or incrementally. In consideration of simplicity of the procedure, an aspect in which the additional initiator is added all at once can be preferably employed.

In the case of the above-mentioned polymerization, since the amount of residual monomer can be efficiently reduced by using the additional initiator as described above, an acrylic polymer in which the amount of residual monomer has been adequately reduced can be obtained without significantly extending polymerization time (even in the case where the polymerization time is, for example, about 8 hours or less). According to a PSA composition having an acrylic polymer as a base polymer, a PSA layer can be formed in which either or both of toluene emission and TVOC emission are significantly reduced. Being able to realize a lower VOC emission of a PSA without requiring a significantly long polymerization time in this manner is preferable from the viewpoint of improving productivity of a PSA composition and a PSA sheet produced using that composition.

In a preferable aspect of the technology disclosed herein, the PSA composition can further contain a tackifier resin in addition to the above-mentioned acrylic polymer. Typically, the PSA composition is prepared by mixing the tackifier resin into a non-toluene-based organic solvent solution (such as an ethyl acetate solution) of the acrylic polymer. There are no particular limitations on the type of tackifier resin, and various types of tackifier resins can be used, such as rosin-based, terpene-based, hydrocarbon-based, epoxy-based, polyamide-based, elastomer-based, phenol-based or ketone-based resins. Such tackifier resins can be used alone or two or more types can be used in combination.

More specifically, examples of rosin-based tackifier resins include non-modified rosins (raw rosins) such as gum rosin, wood rosin, tall oil rosin, modified rosins obtained by modifying these non-modified rosins by hydrogenation, disproportionation or polymerization and the like (such as hydrogenated rosins, disproportionated rosins, polymerized rosins or other chemically modified rosins), and other various types of rosin derivatives. Examples of rosin derivatives include rosin esters such as non-modified rosins esterified by alcohol (namely, rosin esterification products) or modified rosins (such as hydrogenated rosins, disproportionated rosins or polymerized rosins) esterified by alcohol (namely, modified rosin esterification products), unsaturated fatty acid-modified rosins in which a non-modified rosin or modified rosin (such as hydrogenated rosins, disproportionated rosins or polymerized rosins) has been modified with an unsaturated fatty acid, unsaturated fatty acid-modified rosin esters in which a rosin ester has been modified with an unsaturated fatty acid, rosin alcohols in which a carboxyl group in a non-modified rosin, modified rosin (such as a hydrogenated rosin, disproportionated rosin or polymerized rosin), unsaturated fatty acid-modified rosin or unsaturated fatty acid-modified rosin ester has been reduced, metal salts of rosins such as non-modified rosins, modified rosins or various types of rosin derivatives (and particularly, rosin esters), and rosin phenol resins obtained by adding phenol to a rosin (such as a non-modified rosin, modified rosin or various types of rosin derivatives) using an acid catalyst followed by thermal polymerization.

Examples of terpene-based tackifier resins include terpene-based resins such as α-pinene polymers, β-pinene polymers or dipentene polymers, and modified terpene-based resins obtained by modifying these terpene-based resins (such as by phenol modification, aromatic modification, hydrogenation modification or hydrocarbon modification). Examples of the above-mentioned modified terpene resins include terpene-phenol-based resins, styrene-modified terpene-based resins, aromatic-modified terpene-based resins and hydrogenated terpene-based resins.

Examples of hydrocarbon-based tackifier resins include various types of hydrocarbon-based resins such as aliphatic-based hydrocarbon resins, aromatic-based hydrocarbon resins, aliphatic-based cyclic hydrocarbon resins, aliphatic-aromatic-based petroleum resins (such as styrene-olefin-based copolymers), aliphatic-alicyclic-based petroleum resins, hydrogenated hydrocarbon resins, coumarone-based hydrocarbon resins and coumarone-indene-based resins. Examples of aliphatic-based hydrocarbon resins include polymers of one type or two or more types of aliphatic hydrocarbons selected from olefins and dienes with about 4 to 5 carbon atoms. Examples of the above-mentioned olefins include 1-butene, isobutylene and 1-pentene. Examples of the above-mentioned dienes include butadiene, 1,3-pentadiene and isoprene. Examples of aromatic-based hydrocarbon resins include polymers of vinyl group-containing aromatic-based hydrocarbons with about 8 to 10 carbon atoms (such as styrene, vinyltoluene, α-methylstyrene, indene and methylindene). Examples of aliphatic-based cyclic hydrocarbon resins include alicyclic hydrocarbon-based resins obtained by polymerization following cyclic dimerization of so-called "C4 petroleum fractions" or "C5 petroleum fractions", and polymers of cyclic diene compounds (such as cyclopentadiene, dicyclopentadiene, ethylidene norbornene or dipentene) or hydrogenation products thereof, and alicyclic hydrocarbon-based resins obtained by hydrogenating an aromatic ring of an aromatic-based hydrocarbon resin or aliphatic-aromatic-based petroleum resin.

In the technology disclosed herein, a tackifier resin in which the softening point (softening temperature) is about 110°C or higher (preferably about 120°C or higher) is used preferably. The use of a tackifier resin having such a softening point makes it possible to realize a PSA sheet having higher performance (for example, one, two or more types of performance such as high adhesion, superior edge peel prevention or satisfactory heat resistance). There are no particular limitations on the upper limit of the softening point of the tackifier resin, and can be, for example, about 170°C or lower (preferably about 160°C or lower and more preferably about 155°C or lower). A value measured in compliance with JIS K 5601 can be employed as the softening point of the tackifier resin.

In the technology disclosed herein, there are no particular limitations on the amount of the tackifier resin incorporated in the acrylic polymer, and can be suitably set corresponding to the target adhesion performance (such as rough surface adhesion or adhesion to lowly polar materials such as polyolefins). For example, the tackifier resin (based on solid content) can be used at a ratio of about 5 parts by weight to 100 parts by weight (preferably about 10 parts by weight to 80 parts by weight, more preferably about 15 parts by weight to 60 parts by weight, and for example, about 20 parts by weight to 40 parts by weight) to 100 parts by weight of the acrylic polymer. If the amount of the tackifier resin used is excessively low, there are cases in which it may be difficult to adequately demonstrate the effect of addition of the tackifier resin on improving adhesion (such as adhesion to rough surfaces or poorly adhesive adhered objects such as polyolefin members). In addition, if the amount of the tackifier resin used is excessively high, there is increased susceptibility to a lack of compatibility with the acrylic polymer, or low-temperature properties tend to decrease.

A crosslinking agent may also be incorporated in the above-mentioned PSA composition as necessary. There are no particular limitations on the type of crosslinking agent, and a known or commonly used crosslinking agent can be suitably selected and used (such as isocyanate-based crosslinking agents, epoxy-based crosslinking agents, oxazoline-based crosslinking agents, aziridine-based crosslinking agents, melamine-based crosslinking agents, peroxide-based crosslinking agents, urea-based crosslinking agents, metal alkoxide-based crosslinking agents, metal chelate-based crosslinking agents, metal salt-based crosslinking agents, carbodiimide-based crosslinking agents or amine-based crosslinking agents). Both oil-soluble crosslinking agents and water-soluble crosslinking agents can be used. The crosslinking agent can be used alone or two or more types can be used in combination. There are no particular limitations on the amount of crosslinking agent used, and the amount used can be selected from, for example, a range of about 20 parts by weight or less (for example, about 0.005 parts by weight to 20 parts by weight and preferably about 0.01 parts by weight to 10 parts by weight) to 100 parts by weight of the acrylic polymer. The PSA may also be crosslinking by irradiating with an active energy beam such as an electron beam or ultraviolet light instead of using such a crosslinking agent or in addition to using the crosslinking agent.

The above-mentioned PSA composition can also contain an acid or base (such as aqueous ammonia) that is used for the purpose of adjusting pH and the like as necessary. Examples of other arbitrary components able to be contained in the composition include viscosity adjusting agents (such as thickeners), leveling agents, release adjusting agents, plasticizers, softeners, fillers, colorants (such as pigments or dyes), surfactants, antistatic agents, preservatives, aging preventers, ultraviolet absorbers, antioxidants, photostabilizers and various other types of common additives used in the field of aqueous PSA compositions.

The PSA layer in the technology disclosed herein can be produced by various methods. For example, in the case of a double-sided PSA sheet provided with an adhesive substrate, a PSA layer can be formed on each surface of the substrate by applying a method selected from a method in which a PSA composition is directly applied to each of first and second surfaces of a non-releasing substrate followed by drying or curing to form a PSA layer (PSA film) (direct method), and a method in which a PSA layer formed on a release surface of a release liner is laminated to the substrate followed by transferring the PSA film to the substrate (transfer method). In addition, in the case of double-sided PSA sheet not provided with a substrate, a PSA layer can be formed on the release surface by, for example, directly applying a PSA composition to the release surface of a release liner followed by drying or curing. In addition, in the case of a single-sided PSA sheet of a form in which a PSA layer is provided on a non-releasing surface of a non-releasing substrate, the above-mentioned direct method or transfer method can be preferably employed to form the PSA layer.

When applying (and typically, coating) a PSA composition, a commonly used coater (such as a gravure roll coater, reverse roll coater, kiss roll coater, dip roll coater, bar coater, knife coater or spray coater) can be used. There are no particular limitations on the thickness of the PSA layer, and can be, for example, about 2 µm to 200 µm (and preferably about 5 µm to 100 µm).

In the PSA sheet disclosed herein, a substrate similar to the substrate for the previously described release liner can be used in a state in which the release layer is not imparted for the non-releasing substrate that supports the PSA layer. Preferable examples thereof include paper and fabric (such as a non-woven fabric). Surface modification processing or incorporation of additives and the like can be carried out in the same manner as for the release liner as necessary. Although there are no particular limitations on the thickness of the non-releasing substrate, generally a thickness of about 10 µm to 500 µm is suitable.

In a preferable aspect of the PSA sheet disclosed herein, the toluene emission when the sheet is heated for 30 minutes at 80°C (to be simply referred to as "toluene emission") is preferably 20 µg or less per gram of PSA layer (to be indicated as "20 µg/g"). Although there are no particular limitations on the lower limit of the toluene emission, in consideration of such factors as adhesion properties and production efficiency, the lower limit is normally 0.5 µg/g or more and typically 1 µg/g or more. A value obtained by the toluene emission measurement method described below can be employed to determine toluene emission.

### [Toluene Emission Measurement Method]

A sample containing a PSA layer of a prescribed size (for example, having a surface area of 5 cm²) is placed in a vial and sealed. The vial is then heated for 30 minutes at 80°C and 1.0 mL of heated gas is injected into a gas chromatograph measuring apparatus (GC measuring apparatus) using a headspace autosampler to measure the amount of toluene. The amount of toluene generated (emitted) per gram of PSA layer contained in the sample is then calculated from this measurement result (µg/g).
The value obtained by subtracting the weight of the substrate per sample surface area from the weight of the PSA sheet excluding the release liner can be used for the weight of the PSA layer that serves as a reference for calculating the toluene emission per gram of the PSA layer.

In another preferable aspect of the PSA sheet disclosed herein, the amount of TVOC emission when the sheet is heated for 30 minutes at 80°C (to also be simply referred to as "TVOC emission") is about 300 µg or less per gram of PSA layer. Although there are no particular limitations on the lower limit of the TVOC emission, in consideration of such factors as adhesion properties and production efficiency, the lower limit is normally 5 µg/g or more and typically 10 µg/g or more. The value obtained according to the TVOC measurement method indicated below is used for the amount of TVOC emission.

### [TVOC Emission Measurement Method]

A sample similar to that used in the toluene emission measurement method described above is placed in a vial, heated for 30 minutes at 80°C, and 1.0 mL of heated gas is injected into a GC measuring apparatus using a head space autosampler. Peak assignment and quantification are then carried out on volatile substances predicted to be emitted from the material used to produce the PSA layer on the basis of the resulting gas chromatogram (including monomers used to synthesize the acrylic polymer and solvent used to produce an tackifier resin emulsion to be described later) using standards, while other peaks (which are difficult to assign) are quantified by converting to toluene, followed by determining TVOC emission per gram of PSA layer contained in the sample (µg/g).
A value calculated in the same manner as for measurement of toluene emission can be used for the weight of the PSA layer that serves as a reference for calculating the TVOC emission per gram of PSA layer.

Measurement conditions of gas chromatography used in each of the measurement methods of toluene emission and TVOC emission described above are as indicated below.
Column: DB-FFAP, 1.0 µm (0.535 mmφ x 30 m)
Carrier gas: He, 5.0 mL/min
Column head pressure: 23 kPa (40°C)
Injection port: Split (split ratio: 12:1, temperature: 250°C)
Column temperature: 40°C (0 min) - <+10°C/min> - 250°C (9 min)
(after raising the temperature from 40°C to 250°C at the rate of 10°C/min, the temperature is held at 250°C for 9 minutes)
Detector: FID (temperature: 250°C)

### EXAMPLES

Although the following provides an explanation of several examples relating to the present invention, the present invention is not intended to be limited to the indicated examples. In the following explanations, the terms "parts" and "percent (%)" are based on weight unless specifically indicated otherwise.

### <Example 1>

70 parts of n-butyl acrylate (BA), 27 parts of 2-ethylhexyl acrylate (2-EHA), 3 parts of acrylic acid (AA), 0.1 parts of 2-hydroxyethyl acrylate and ethyl acetate were placed in a reaction vessel equipped with a condenser, nitrogen gas feed tube, thermometer and stirrer followed by introducing nitrogen gas while stirring gently to replace the inside of the vessel with nitrogen. This reaction liquid was heated to 70°C followed by the addition of 0.2 parts of AIBN (polymerization initiator). A polymerization reaction was carried out for 8 hours while holding the system at 70°C to obtain an ethyl acetate solution of an acrylic polymer having a weight average molecular weight of 70 × 10⁴.
20 parts of an tackifier resin (Rika TAC, trade name: "RikaTAC PCJ", polymerized rosin ester resin having a softening point of 128°C) and 2 parts of a crosslinking agent (Nippon Polyurethane Industry, trade name: "Coronate L", isocyanate-based crosslinking agent) were added to this solution per 100 parts of the acrylic polymer contained in the solution followed by uniformly stirring and mixing to obtain a non-toluene solvent-based PSA composition using ethyl acetate as a solvent.

A release liner substrate was prepared in which a polyethylene (PE) layer having a thickness of 25 µm was laminated onto one side of wood-free paper (grammage: 100 g/m²). A mixture of a non-transferring, heat-curable solvent-free silicone-based release agent and curing catalyst were coated onto the PE layer of this substrate at a coated amount of 1.1 g/m². This was then dried and cured by holding for 1 minute at 120°C to obtain a release liner A.

The above-mentioned non-toluene-solvent-type PSA composition was then coated at a thickness of 70 µm on the release layer of the resulting release liner A to form a PSA layer. Two of these PSA layers were prepared and respectively transferred to each side of a non-woven cloth substrate (Daifuku Paper Mfg., trade name: "SP Stencil Paper 14", pulp-based non-woven fabric, grammage: 14 g/m², thickness: 42 µm, bulk density: 0.33 g/cm³). In this manner, a double-sided PSA sheet was obtained in which both PSA surfaces were protected by two release liners A.

### <Example 2>

A UV-curable, solvent-free silicone-based release agent was coated onto a PE layer of a substrate obtained in the same manner as Example 1 instead of the mixture of release agent and catalyst of Example 1. The amount of the release agent coated was 1.3 g/m². After coating the release agent, the release agent was irradiated with ultraviolet light under conditions of luminance of 2 *W*/*cm²* and a line speed of 70 m/min using a high-pressure mercury lamp for the light source to cure the release agent and obtain a release liner B.
A double-sided PSA sheet, provided with a PSA layer composed of a non-toluene solvent-based PSA composition, was obtained in the same manner as Example 1 with the exception of using the release liner B instead of the release liner A.

### <Example 3>

A release liner C was obtained in the same manner as Example 1 with the exception of using a general heat-curable, solvent-free silicone-based release agent and a curing catalyst instead of the release agent and curing catalyst of Example 1 and making the coated amount of the release agent 1.5 g/m².
A double-sided PSA sheet, provided with a PSA layer composed of a non-toluene solvent-based PSA composition, was obtained in the same manner as Example 1 with the exception of using the release liner C instead of the release liner A.

The release liners A to C and the double-sided PSA sheets obtained in Examples 1 to 3 were measured and evaluated as described below. Those results are shown in Table 1 along with the types of PSA compositions used.

### [Measurement of Toluene Emission]

The amount of toluene emission per gram of PSA layer was measured for each of the double-sided PSA sheets of Examples 1 to 3 according to the previously described method.

### [Measurement of TVOC Emission]

The amount of TVOC emission per gram of PSA layer was measured for each of the double-sided PSA sheets of Examples 1 to 3 according to the previously described method. The same test pieces as those used to measure toluene emission were used.
A value of about 0.91 g was used for the weight of the PSA layer contained in 1 g of each double-sided PSA sheet to calculate the above-mentioned toluene and TVOC emission.

### [Measurement of Release Liner Peel Strength]

Peel strength was measured for each of the release liners A, B and C. Namely, a piece of adhesive tape (Nitto Denko Corporation, product No. 502, 50 mm wide acrylic double-sided adhesive tape) having a length of about 20 cm was prepared, the yellow release paper was peeled off, and a release liner was affixed to the exposed adhesive surface using a hand roller in an environment at a temperature of 23°C and RH of 50% to produce a test piece. This test piece was then subjected to a load of 1 kg in an environment at 100°C for 1 hour followed by holding for 1 hour in an environment at a temperature of 23°C and RH of 50%. The adhesive strength when the release liner was peeled for a distance of 50 mm using a tensile tester under conditions of a peeling angle of 180° and pulling speed of 300 mm/min in an environment at 23°C and 50% RH was measured, and the maximum value thereof was defined as peel strength (N/50 mm). An auxiliary plate was used to measure peel strength.

### [Measurement of Amount of Silicone Transfer]

The amount of silicone transfer was measured for each of the release liners A, B and C according to the previously described method using the Model "ZSX-100e" manufactured by Rigaku Corporation for the XRF analyzer under the conditions indicated below.
X-ray source: Vertical Rh tube
Analysis range: Within a circle having a diameter of 30 mm
Spectroscopic crystals: Si-Kα
Output: 50 kv, 70 mA

### [Measurement of SUS 180° Peeling Adhesive Strength]

The first release liner was peeled from each double-sided PSA sheet followed by backing the PSA sheet with a PET film having a thickness of 25 µm by affixing the PET film thereto. The backed PSA sheet was cut to the shape of a rectangle measuring 20 mm x 200 mm to produce a test piece. The second release liner was peeled from this test piece, and the exposed adhesive surface was affixed to a stainless steel (SUS: B304) plate serving as an adherend by passing a 2 kg roller back and forth over the PSA sheet affixed to the stainless steel plate. After holding for 30 minutes in an environment at 23°C and 50% RH, SUS 180° peeling adhesive strength was measured in compliance with JIS Z 0237 using a tensile tester (Shimadzu, trade name: "Tensilon") under conditions of a peeling angle of 180° and pulling speed of 300 mm/min in an environment at 23°C and 50% RH.

### [Measurement of PP 180° Peeling Adhesive Strength]

PP 180° peeling adhesive strength was measured in the same manner as the above-mentioned SUS 180° peeling adhesive strength with the exception of using a PP plate instead of an SUS plate for the adherend.

### [Evaluation of Curved Surface Adhesion]

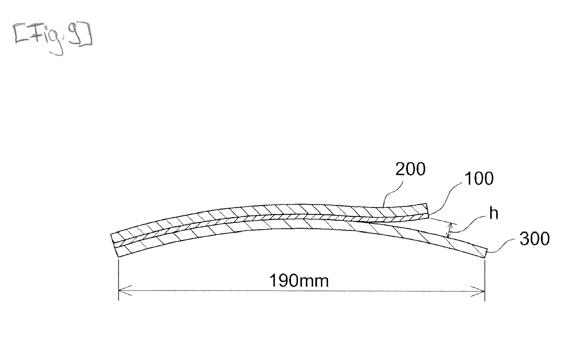

Each double-sided PSA sheet was cut to a width of 20 mm and length of 180 mm, the first release liner was peeled off, and an aluminum plate cut to the same size and having a thickness of 0.4 mm was affixed to the exposed first adhesive surface to produce an aluminum-backed test piece. After pressing this test piece onto a PP plate cut to a size of 30 mm x 200 mm and having thickness of 2 mm using a laminator in an environment at 23°C and 50% RH, the laminate was held for 24 hours in the same environment. Next, as shown in FIG. 8, the PP plate affixed with the test piece was bent into the shape of an arc having a chord length of 190 mm. This was then held for 72 hours in an atmosphere at 70°C followed by measurement of a distance h (mm) that the ends of the test piece lifted from the surface of the PP plate (FIG. 9). Reference numerals 100, 200 and 300 in FIGS. 8 and 9 respectively indicate a double-sided PSA sheet, aluminum plate and PP plate from which the first and second release liners have been removed.

**Table 1**

| Example | Release liner | Amt. of silicone coated (g/m²) | Amt. of silicone transfer (kcps) | Peel strength (N/50 mm) | Adhesive strength (N/20 mm) | | Curved surface adhesion (mm) | Toluene emission (µg/g) | TVOC (µg/g) |
|---|---|---|---|---|---|---|---|---|---|
| | | | | | SUS | PP | | | |
| 1 | A | 1.1 | 0.8 | 0.3 | 15.3 | 12 | 0.5 | 3 | 200 |
| 2 | B | 1.3 | 4.8 | 0.6 | 14 | 11 | 1.0 | 3 | 200 |
| 3 | C | 1.5 | 11.3 | 1.1 | 12.5 | 9.5 | 3.0 | 3 | 200 |

As is shown in Table 1, the PSA sheets of Examples 1 and 2, in which the amounts of silicone transfer were 10 kcps or less, demonstrates superior results with respect to SUS adhesive strength, PP adhesive strength and curved surface adhesion in comparison with the PSA sheet of Example 3, in which the amount of silicone transfer exceeded 10 kcps.

### <Example 4>

Marks consisting of "Low VOCs" were printed at constant intervals using a 14-point, Century-Gothic font in green ink (trade name: "Wraptone", Sakata Inx Corporation) on one side of wood-free paper. A total of eight types of printed paper were prepared in which the ratio of the area over which ink was applied to the surface area of one side of the wood-free paper (printed surface area ratio) was varied over the range of 2% to 47% by changing the spacing between the marks. Furthermore, the printed surface area ratio was determined by photographing the printed paper with a digital camera, converting the resulting images to binary values following monochromatic conversion processing, and then calculating the printed surface area ratio using commercially available image processing software (trade name: "Winroof", Mitani Corporation).

The printed surface (back surface) of each of the printed paper and the surface on the opposite side (front surface) were respectively laminated with polyethylene and the resulting laminated was used as a release liner substrate followed by carrying out silicone treatment on both sides in the same manner as Example 1 (release liner A). In this manner, a release liner was produced in which both the front surface and the back surface were release surfaces. The green mark printed onto one side of wood-free paper was displayed on the back surface of this release liner through the polyethylene laminate covering that side.

PSA sheets were produced of a form in which both PSA surfaces of a double-sided PSA sheet with substrate were protected with release liners by using two each of the total of 8 types of release liners prepared in the manner described above. Namely, the above-mentioned PSA composition was coated onto the front surface of the first release liner followed by drying for 2 minutes at 100°C to form a PSA film having a thickness of about 60 µm. A PSA film having a thickness of about 60 µm was then similarly formed on the front surface of the second release liner. These release liners having PSA films were then respectively laminated onto both sides of a non-woven fabric substrate (pulp-based non-woven fabric, trade name: "SP Stencil Paper 14", Daifuku Paper Mfg. Co., Ltd., grammage: 14 g/m², thickness: 42 µm, bulk density: 0.33 g/cm³), and the PSA was transferred to both sides of the non-woven fabric substrate (non-releasing substrate). Both PSA surfaces of the double-sided PSA sheets with substrate are directly protected by the release liners used to produce the double-sided PSA sheets. In this manner, 8 types of PSA sheets were produced having different printed surface area ratios of the release liner.

The above-mentioned 8 types of PSA sheets were cut to a size of 10 cm x 10 cm, and then fixed to a vertical wall surface at a location roughly at eye level so that the surface on which the printed matter was displayed (back surface) was on the outside. A test supervisor having 20/20 vision then looked at the back surface of the PSA sheet while standing at a distance 10m away from the wall in order to evaluate whether or not the color of the mark can be recognized. The results are shown in Table 2, with the case of being able to recognize the color of the mark evaluated as "distinctiveness: positive (P)" and the case of being unable to recognize the mark evaluated as "distinctiveness: negative (N)".

**Table 2**

| | | | | | | | | |
|---|---|---|---|---|---|---|---|---|
| Printed surface area ratio (%) | 2 | 4 | 6 | 8 | 11 | 17 | 34 | 47 |
| Distinctiveness | N | N | P | P | P | P | P | P |

As shown in Table 2, by making the printed surface area ratio 5% or more (and more specifically, 5% to 50%), the color of the mark was able to be favorably distinguished even at a distance of 10 m away. Since superior distinctiveness from a distant location in this manner makes it possible to recognize that the PSA sheet has low VOC specifications from far away in the case of a roll of the PSA sheet is placed on a shelf at a considerable distance away, for example, a PSA having low VOC specifications can be efficiently found and retrieved. As a result, workability at the time of using the PSA sheet can be greatly improved.

Although the above has provided a detailed explanation of specific examples of the present invention, the specific examples are merely exemplary of the present invention and do not limit the scope of the claims. Various modifications and alterations of the previously listed specific examples are included in the technology described in the claims.

## Claims

1. A pressure-sensitive adhesive sheet, comprising:
a release liner having, on at least a first side thereof, a release layer composed of a silicone-based release agent; and a pressure-sensitive adhesive layer provided on the release layer,
wherein the pressure-sensitive adhesive sheet satisfies all of the following conditions:
the pressure-sensitive adhesive layer contains an acrylic polymer synthesized in ethyl acetate as an adhesive component;
the release layer has an amount of silicone that transfers to Single-Sided Adhesive Tape No. 31B manufactured by Nitto Denko Corporation of 10 kcps or less per unit surface area equivalent to a circle having a diameter of 30 mm when determined as X-ray intensity of silicon by X-ray fluorescence analysis; and
a mark of a color selected from green and blue is displayed on the back of the pressure-sensitive adhesive sheet.

2. The pressure-sensitive adhesive sheet according to claim 1, wherein the silicone-based release agent is solvent-free silicone.

3. The pressure-sensitive adhesive sheet according to claim 1 or claim 2, wherein the silicone-based release agent is heat-curable silicone.

4. The pressure-sensitive adhesive sheet according to any of claims 1 to 3, wherein, when the pressure-sensitive adhesive sheet is held for 30 minutes at 80°C, the total amount of toluene emitted from the sheet is 20 µg or less per gram of the pressure-sensitive adhesive layer, and the total amount of volatile organic compounds emitted from the sheet is 300 µg or less per gram of the pressure-sensitive adhesive layer.

5. The pressure-sensitive adhesive sheet according to any of claims 1 to 4, wherein the pressure-sensitive adhesive layer contains an acrylic polymer obtained by polymerizing a monomer starting material containing an acrylic monomer represented by the general formula: CH₂=C(R¹)COOR² (wherein, R¹ represents a hydrogen atom or methyl group, and R² represents an alkyl group with 2 to 14 carbon atoms).

6. The pressure-sensitive adhesive sheet according to any of claims 1 to 5, wherein the pressure-sensitive adhesive sheet is configured as a double-sided pressure-sensitive adhesive sheet obtained by laminating a substrate of which both sides are non-releasing onto the pressure-sensitive adhesive layer on the release layer, and further laminating a pressure-sensitive adhesive layer onto the substrate.
